(19) Europäisches Patentamt
European Patent Office
Office européen des brevets

(11) **EP 1 699 231 A1**

(12) **EUROPEAN PATENT APPLICATION**
published in accordance with Art. 158(3) EPC

(43) Date of publication:
06.09.2006 Bulletin 2006/36

(51) Int Cl.:
*H04N 5/235* (2006.01)    *H04N 5/335* (2006.01)

(21) Application number: 03786326.3

(22) Date of filing: 25.12.2003

(86) International application number:
PCT/JP2003/016810

(87) International publication number:
WO 2005/064922 (14.07.2005 Gazette 2005/28)

(84) Designated Contracting States:
DE FR SE

(71) Applicant: NILES CO., LTD.
Tokyo 143-8521 (JP)

(72) Inventors:
• KAWAMURA, Hiroyuki
NILES Co., Ltd.
Tokyo 143-8521 (JP)

• HOSHINO, Hironori
NILES Co., Ltd.
Tokyo 143-8521 (JP)

(74) Representative: Luderschmidt, Schüler & Partner
Patentanwälte,
John-F.-Kennedy-Strasse 4
65189 Wiesbaden (DE)

(54) **IMAGING SYSTEM**

(57) An imaging system includes an infrared lamp to emit infrared light, a CCD camera (5) to pick up an image of a place irradiated with the infrared lamp and convert the picked-up image into an electric signal, and an image processing unit (7) to periodically change a signal accumulation time of the CCD camera and periodically and continuously provide images of different exposure values. The image processing unit extracts a high-brightness block surrounded with a medium-brightness area from a first image of the periodically provided images, and according to a degree of the medium-brightness area, controls a signal accumulation time of a second image to be picked up.

Fig.2

EP 1 699 231 A1

**Description**

BACKGROUND OF THE INVENTION

1. Field of the Invention

The present invention relates to an imaging system employing, for example, a CCD camera.

2. Description of Related Art

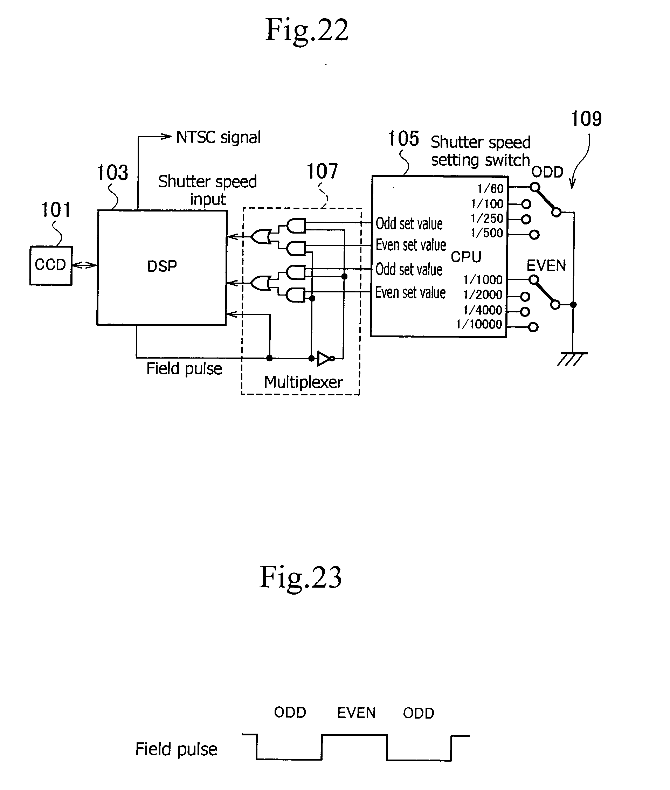

Figure 22 shows an imaging system according to a related art. In Fig. 22, the imaging system includes a CCD (charge-coupled device) 101 as an image pickup unit, a DSP (digital signal processor) 103 as an image processing unit, and a CPU (central processing unit) 105.

The CPU 105 and DSP 103 are connected to each other through a multiplexer 107. The CPU 105 receives a signal from a shutter speed setting switch 109. The switch 109 sets a shutter speed for an odd field and a shutter speed for an even field.

The CPU 105 reads a shutter speed set by the switch 109, encodes the read shutter speed for a given field, and provides the encoded shutter speed. The DSP 103 outputs a field pulse signal shown in Fig. 23. When the field pulse signal is high, the multiplexer 107 provides a shutter speed set terminal of the DSP 103 with a shutter speed set for an even field. When the field pulse signal is low, the multiplexer 107 provides the shutter speed set terminal of the DSP 103 with a shutter speed set for an odd field. In this way, the imaging system of Fig. 22 can set different shutter speeds depending on fields.

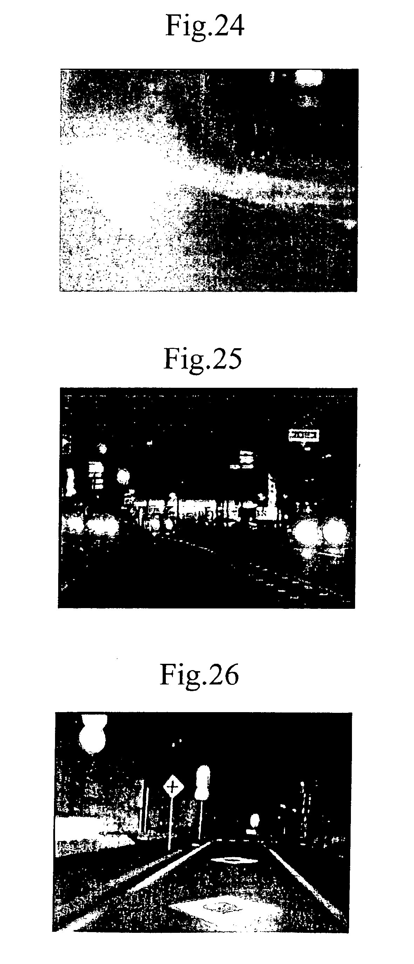

There is a CCD camera employing the same shutter speed for odd and even fields. Figure 24 shows an example of an image taken with this sort of CCD camera. The image includes a bright light source in dark surroundings. In the image, the bright light source and periphery thereof are invisible due to halation.

The CCD camera used for picking up the image of Fig. 24 is mounted on a vehicle having an infrared lamp as an infrared light emitter. When driving in the night, the vehicle emits infrared light from the infrared lamp to front side of the vehicle so that the CCD camera may pick up images such as the one shown in Fig. 24. The bright light source shown in the image of Fig. 24 which is the headlights of an oncoming vehicle and the periphery thereof invisible due to halation. If there is a bright source in dark surroundings in the night, a CCD camera employing an overall photometry system is dominated by the dark surroundings, and therefore, calculates a long exposure time, i.e., a slow shutter speed. This shutter speed is too slow for the bright source, which therefore causes halation.

The shutter speed may be fast to suppress the halation. This, however, makes the dark surroundings more darker to make them hardly visible as shown in Fig. 25.

If there is a reflective object such as a road sign of Fig. 26, a slow shutter speed will be set due to the road sign, to make the surroundings of the road sign invisible in a similar fashion.

To cope with this problem, there is dual exposure control that changes a shutter speed field by field. This control alternately provides bright and dark images. A bright image (for example, an even field) may display dark parts, and the dark image (for example, an odd field) may display bright parts which may cause halation in the bright image.

Alternating bright and dark images results in displaying clear images on a monitor.

The dual exposure control that alternately provides bright and dark images (fields), however, causes flicker on a monitor.

Figure 27 shows an imaging system disclosed in Japanese Patent Publication No. 07-97841. This imaging system has a processing unit 115 and a camera 113 including an image pickup element 111.

Figure 28 schematically shows image processing carried out by the imaging system of Fig. 27. In Fig. 28, a through image is an image directly provided from the image pickup element 111 of the camera 113, and a memory image is an image of a preceding field stored in an image memory 117.

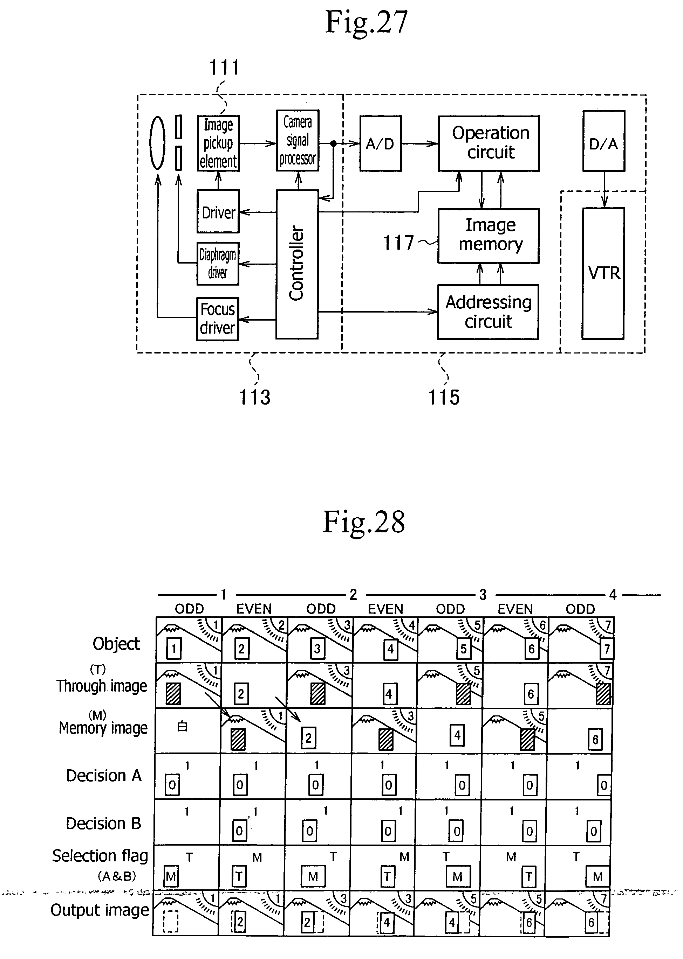

In Fig. 28, each odd field is set with a fast shutter speed and each even field is set with a slow shutter speed. In each odd field, a through image shows a main object which is crushed black, and in each even field, a through image shows a background that is saturated white. Each memory image is one field behind, and therefore, is crushed black or saturated white oppositely to a corresponding through image. Properly combining the through and memory images may provide appropriate output images shown in a bottom row of Fig. 28.

This related art, however, combines through and memory images by partly extracting and overlaying the through and memory images. Namely, the related art combines images of different exposure values together. Accordingly, this related art may reduce the flicker intrinsic to the dual exposure control but it causes a problem of creating unnatural boundaries in the combined through and memory images.

## SUMMARY OF THE INVENTION

An object of the present invention is to provide an imaging system capable of providing clear images.

In order to accomplish the object, a first aspect of the present invention provides an imaging system including an infrared light emitter configured to emit infrared light, an image pickup unit configured to pick up an image of a place irradiated with the infrared light and convert the picked-up image into an electric signal, and an image processing unit configured to periodically change a signal accumulation time of the image pickup unit and periodically and continuously provide images of different exposure values. The image processing unit extracts a high-brightness block surrounded with a medium-brightness area from a first image of the periodically provided images, and according to a degree of the medium-brightness area, controls a signal accumulation time of a second image to be picked up.

According to the first aspect, the infrared light emitter emits infrared light, the image pickup unit picks up an image of a place irradiated with the infrared light and converts the picked-up image into an electric signal, and the image processing unit periodically changes a signal accumulation time of the image pickup unit and periodically and continuously provides images of different exposure values.

According to the first aspect, the image processing unit extracts a high-brightness block surrounded with a medium-brightness area from a first image of the periodically provided images, and according to a degree of the medium-brightness area, controls a signal accumulation time of a second image to be picked up.

Even if the image pickup unit receives strong light from, for example, the headlights of an oncoming vehicle, the first aspect can remove or suppress, in a picked up image, a gradually darkening area around a high-brightness block representative of the strong light. If there is a pedestrian or an obstacle in the vicinity of the strong light, the first aspect can clearly pick up an image of the pedestrian or obstacle.

According to a second aspect of the present invention, the image processing unit divides the first image into high-brightness blocks, medium-brightness blocks, and low-brightness blocks, and according to the number of medium-brightness blocks around a group of high-brightness blocks, controls an image signal accumulation time of the second image.

According to the number of medium-brightness blocks around a group of high-brightness blocks, the second aspect can surely grasp a degree of the medium-brightness blocks and control an image signal accumulation time of the second image.

According to a third aspect of the present invention, the image processing unit divides the first image into a plurality of blocks, finds an average brightness value of each of the blocks, and according to the average brightness values of the blocks and two thresholds, classifies the blocks into high-brightness blocks, medium-brightness blocks, and low-brightness blocks.

The third aspect can improve an image processing time compared with a technique that processes an image pixel by pixel.

According to a fourth aspect of the present invention, the image processing unit divides the first image into a plurality of blocks, classifies pixels in each of the blocks into high-brightness pixels, medium-brightness pixels, and low-brightness pixels according to two thresholds, finds a maximum one of the numbers of the high-, medium-, and low-brightness pixels in each of the blocks, determines the brightness level of the pixels of the maximum number as the brightness level of the block, and according to the determined brightness levels of the blocks, classifies the blocks into high-brightness blocks, medium-brightness blocks, and low-brightness blocks.

The fourth aspect secures correctness by processing an image pixel by pixel.

According to a fifth aspect of the present invention, the image processing unit finds the number of medium-brightness blocks surrounding each high-brightness block, finds a maximum one of the numbers of the surrounding medium-brightness blocks, and controls an image signal accumulation time of the second image according to the maximum number.

The fifth aspect can easily identify halation and speedily conduct image processing.

According to a sixth aspect of the present invention, the image processing unit finds the number of high-brightness blocks that form a group, the number of medium-brightness blocks around the group, and a reference number of medium-brightness blocks related to the group, and controls an image signal accumulation time of the second image according to these numbers.

The sixth aspect can properly identify halation and correctly conduct image processing.

According to a seventh aspect of the present invention, the image processing unit identifies a high-brightness block and searches the periphery of the high-brightness block for medium-brightness blocks and high-brightness blocks, the found high-brightness blocks being grouped with the high-brightness block.

The seventh aspect can correctly and speedily extract and control high-brightness blocks.

According to an eighth aspect of the present invention, the infrared light emitter, image pickup unit, and image processing unit are installed in a vehicle. The infrared light emitter emits infrared light toward the outer side of the vehicle. The image pickup unit picks up an image of the outer side of the vehicle.

Even if there is halation due to, for example, the headlights of an oncoming vehicle, the eighth aspect can remove or suppress a gradually darkening area around the halation. If there is a pedestrian or an obstacle in the vicinity of the halation, the first aspect can clearly pick up an image of the pedestrian or obstacle.

BRIEF DESCRIPTION OF THE DRAWINGS

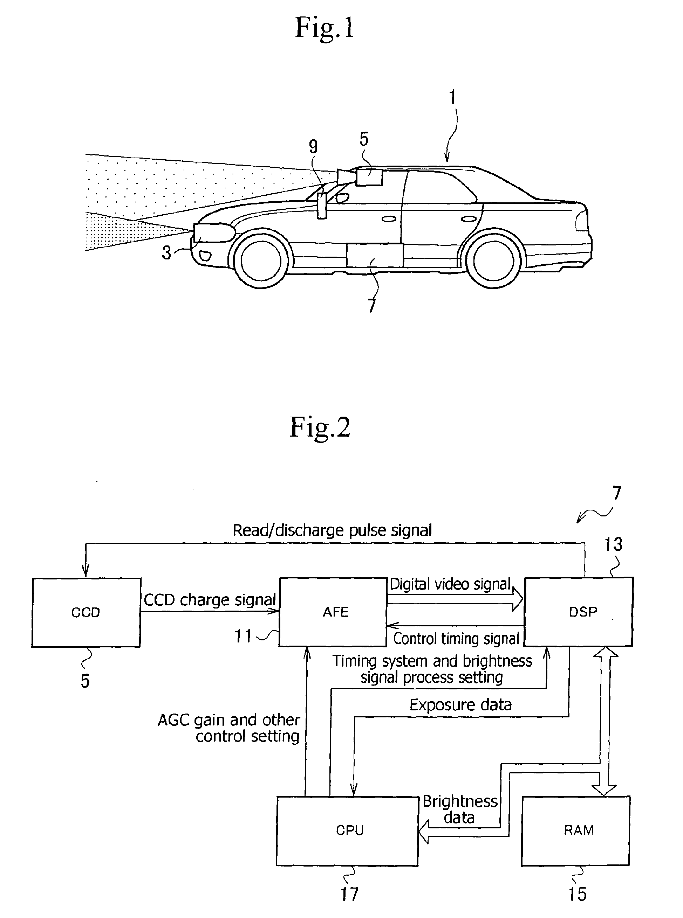

Figure 1 is a general view showing a vehicle in which an imaging system according to an embodiment of the present invention is installed;
Fig. 2 is a block diagram showing a camera and an image processing unit of the imaging system;

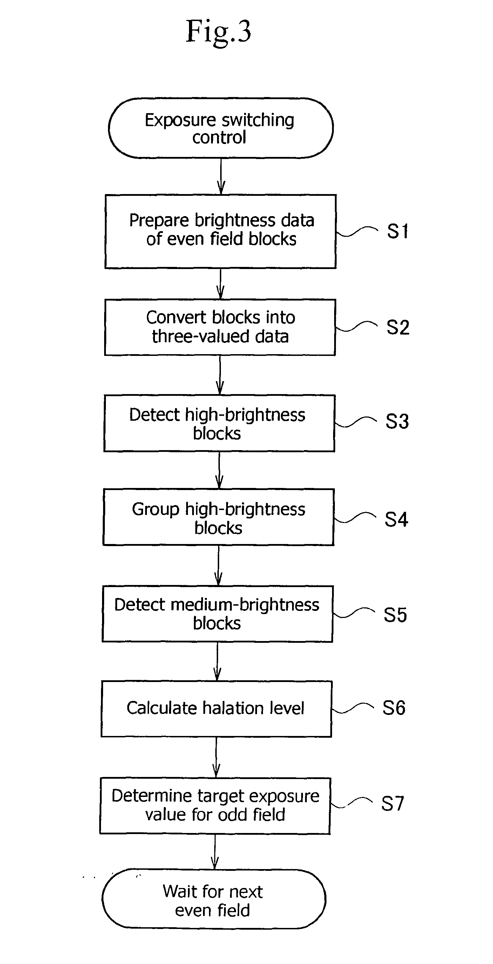

Fig. 3 is a flowchart showing exposure switching control according to an embodiment of the present invention;

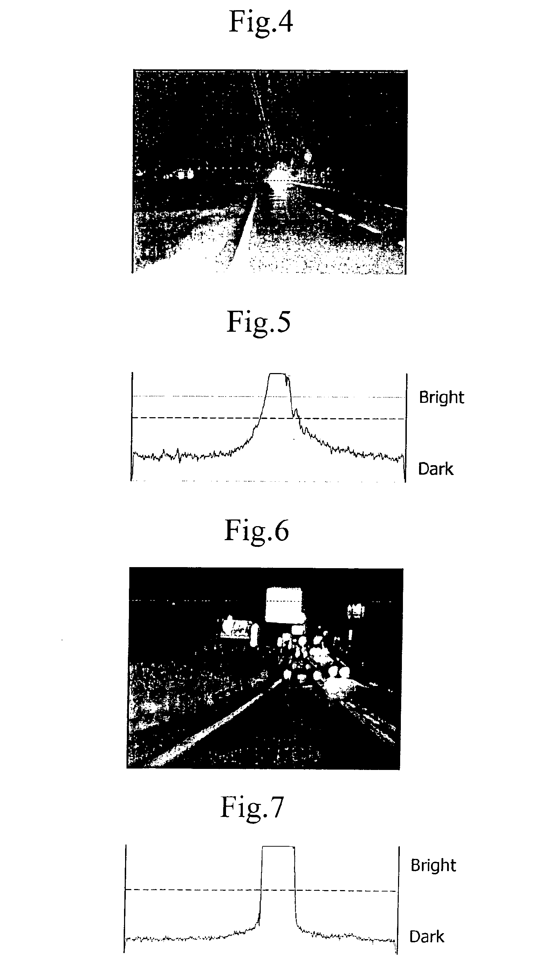

Fig. 4 is an image showing a light source in an image picked up according to simple control;
Fig. 5 is a graph showing changes in brightness along a horizontal line across the light source of Fig. 4;
Fig. 6 is an image showing a reflective object in an image picked up according to simple control;
Fig. 7 is a graph showing changes in brightness along a horizontal line across the reflective object of Fig. 6;

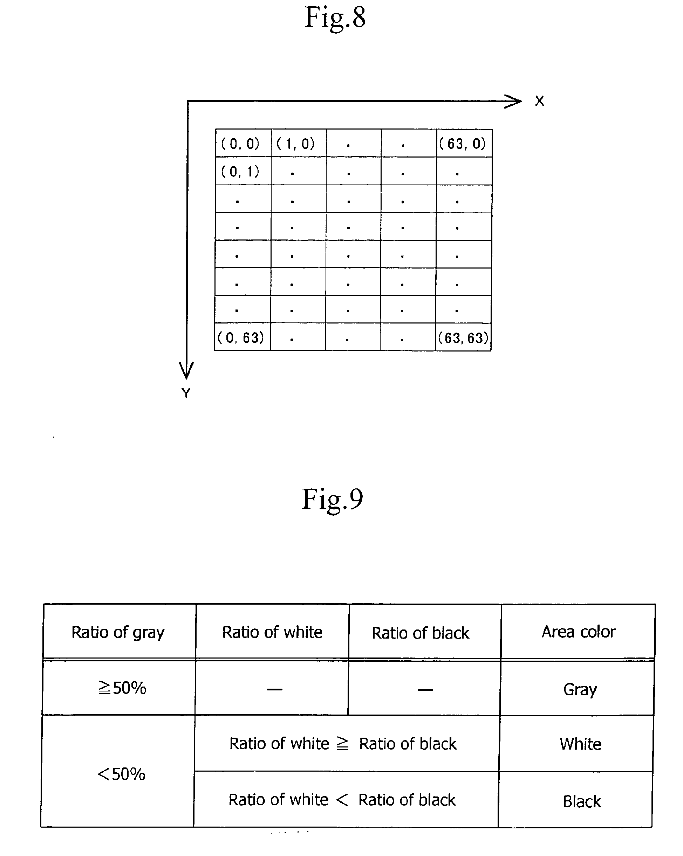

Fig. 8 is a model showing blocks divided from brightness data of an even field according to an embodiment of the present invention;
Fig. 9 is a table showing the coloring of a block based on a gray ratio according to an embodiment of the present invention;

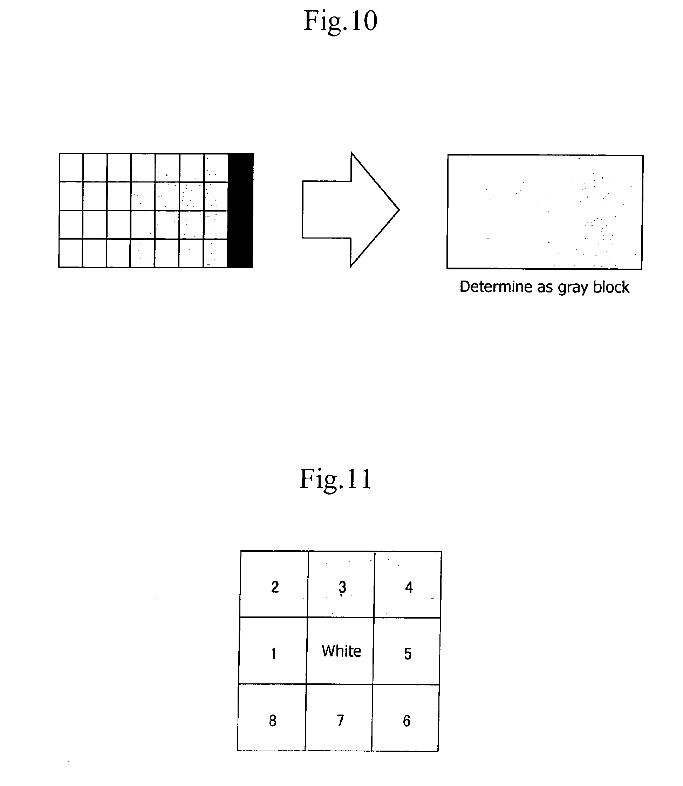

Fig. 10 is a schematic view showing the coloring of a block according to an embodiment of the present invention;
Fig. 11 is a schematic view showing a block search sequence according to an embodiment of the present invention;

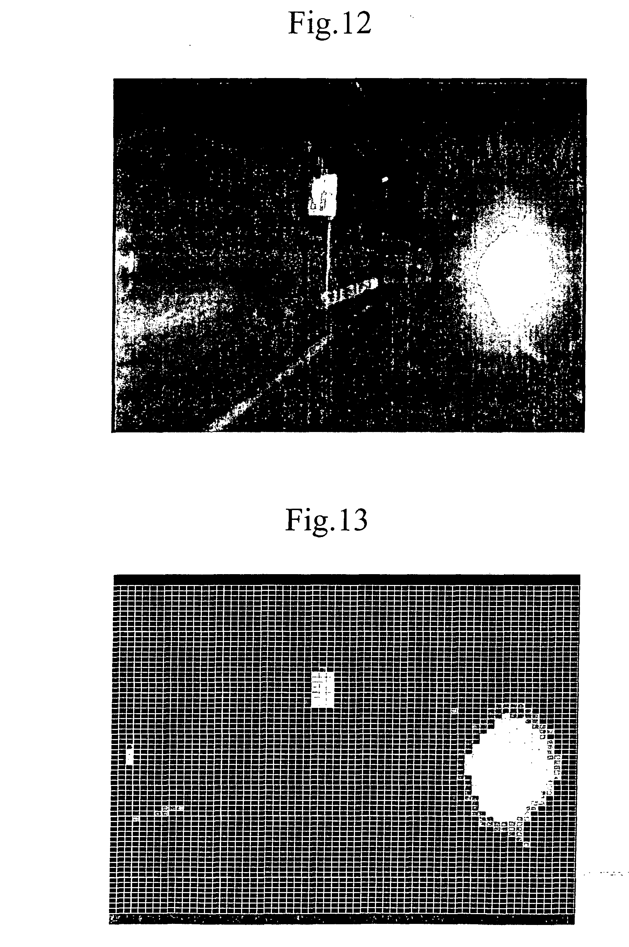

Fig. 12 is an image showing an output image including a bright source whose periphery is to be examined;
Fig. 13 is an image showing a result of examination of the image of Fig. 12, the periphery of the bright source being displayed with three colors according to an embodiment of the present invention;

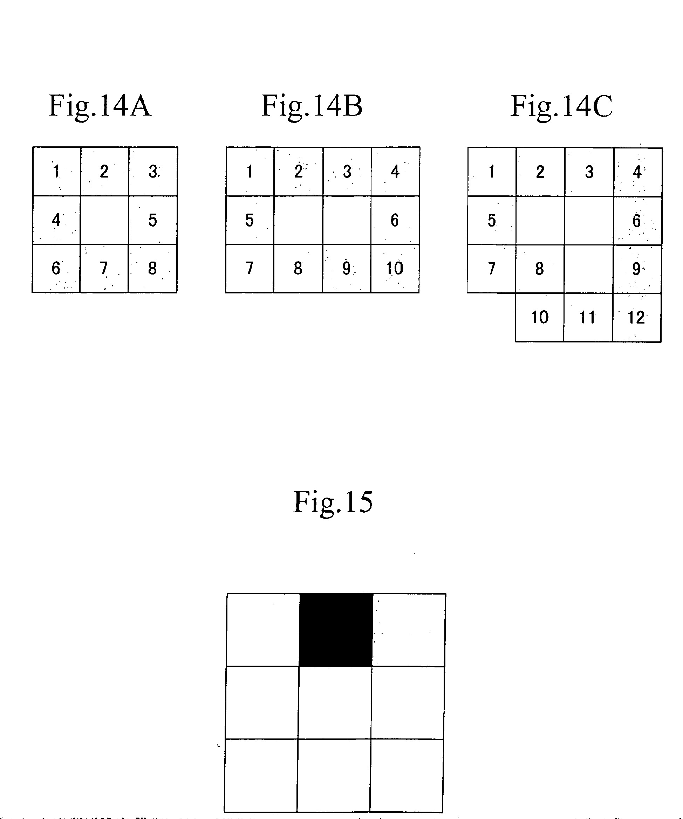

Fig. 14 shows relationships between the number of standard blocks and the number of white blocks according to an embodiment of the present invention, in which Fig. 14A includes one white block, Fig. 14B includes two white blocks, and Fig. 14C includes three white blocks;
Fig. 15 is a schematic view showing blocks related to halation according to an embodiment of the present invention;

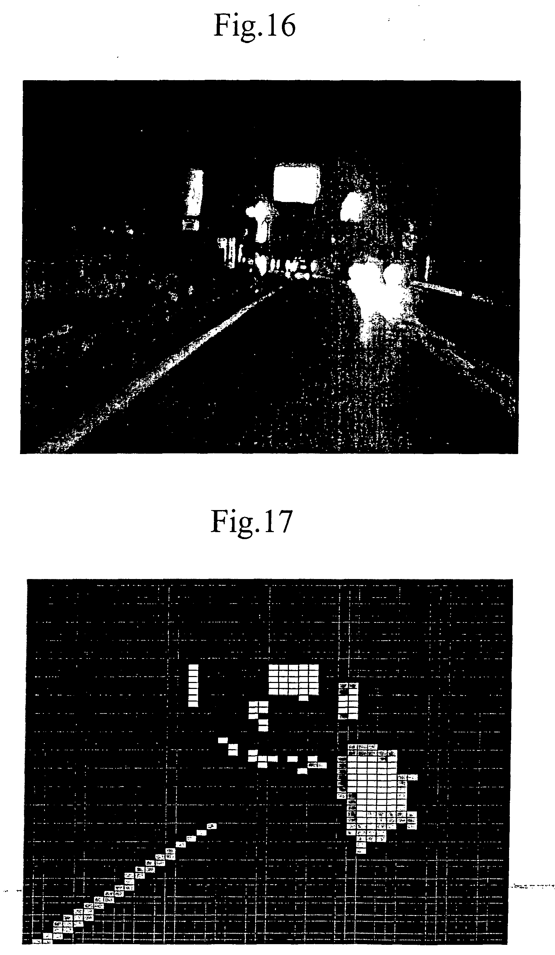

Fig. 16 is an image showing an output image showing among reflective objects that may reflect light and light sources;
Fig. 17 is an image showing a result of coloring carried out on the image of Fig. 16 according to an embodiment of the present invention;

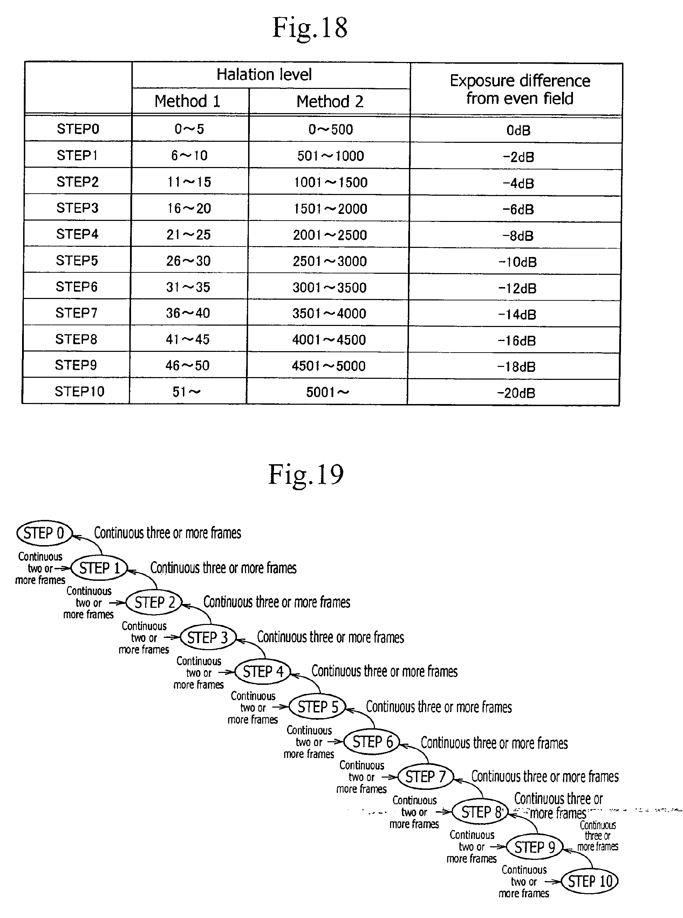

Fig. 18 is a table showing exposure differences between even and odd fields according to an embodiment of the present invention;
Fig. 19 is a view showing transition of halation strength according to an embodiment of the present invention;

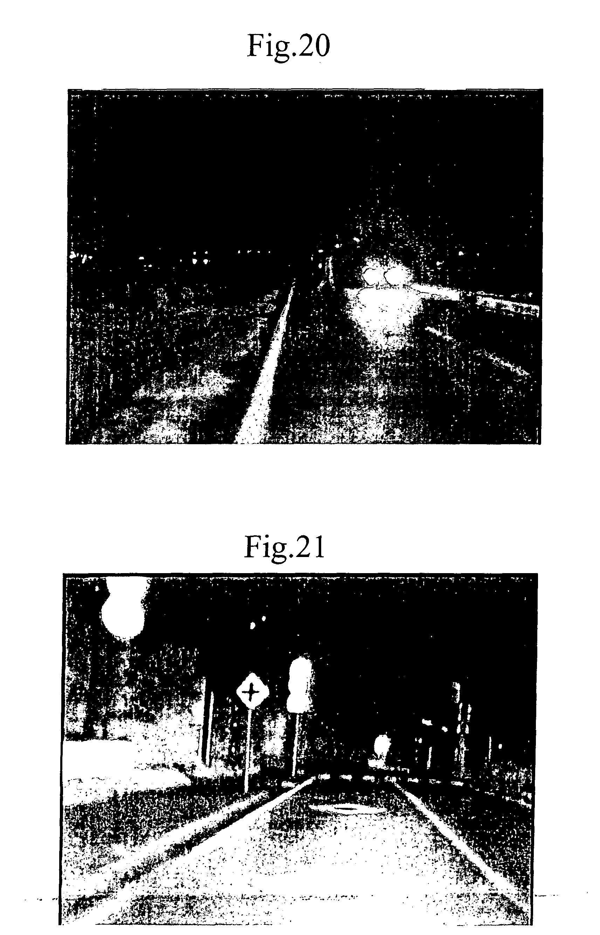

Fig. 20 is an image showing a processed image in which an object is visible in halation according to an embodiment of the present invention;
Fig. 21 is an image showing a processed image in which surroundings are visible irrespective of reflective objects according to an embodiment of the present invention;
Fig. 22 is a block diagram showing an imaging system according to a related art;
Fig. 23 is a view showing a field pulse according to the related art;
Fig. 24 is an image showing an output image including a light source and its surroundings that are invisible due to halation according to the related art;
Fig. 25 is an image showing an output image including parts that are invisible due to halation according to the related art;
Fig. 26 is an image showing an output image including reflective objects and their surroundings that are invisible according to the related art;
Fig. 27 is a block diagram showing an imaging system according to another related art; and
Fig. 28 is a view showing images provided by the related art of Fig. 27.

DETAILED DESCRIPTION OF EMBODIMENTS

An imaging system according to an embodiment of the present invention will be explained. Figure 1 generally shows a vehicle 1 in which the imaging system according to the embodiment is installed, Fig. 2 is a block diagram showing the imaging system, and Fig. 3 is a flowchart showing exposure switching control according to the embodiment.
In Fig. 1, the vehicle 1 has an infrared lamp 3 serving as an infrared light emitter for emitting infrared light, a CCD camera 5 serving as an image pickup unit, an image processing unit 7, and a head-up display 9.
The infrared lamp 3 emits infrared light to the front side of the vehicle in a running direction of the vehicle 1 to pick up images in the night or when the circumstance of the vehicle 1 is dark. The CCD camera 5 photographs as photosensitive elements a front sight of the vehicle 1 with the infrared light emitted from the infrared lamp 3 and converts the photographed image into an electric signal. More precisely, photodiodes in the CCD camera 5 convert images into electric signals. The image processing unit 7 changes a signal accumulation time of the CCD camera 5 at predetermined intervals, to continuously and periodically output images of different exposure values.

The signal accumulation time is set for every pixel. Changing a signal accumulation time at predetermined intervals means to change the number of pulses with which unnecessary charge accumulated in pixels is discharged. This operation is an electronic shutter operation. Continuously and periodically providing images of different exposure values means to set different shutter speeds for odd and even fields with the electronic shutter operation and alternately and continuously provide images of the odd and even fields at intervals of, for example, 1/60 seconds.

At a high shutter speed, bright parts are clearly picked up although dark parts are hardly picked up, and at a slow shutter speed, dark parts are clearly picked up although bright parts are saturated.

The image processing unit 7 extracts, from a first image, a high-brightness block whose periphery has a medium brightness and controls the signal accumulation time of a second image according to the degree of the medium brightness.

In Fig. 2, the CCD camera 5 and image processing unit 7 include a CCD 5a, an AFE (analog front end) 11, a DSP (digital signal processor) 13, a RAM 15, a CPU 17, and the like.

The CCD camera 5 includes the CCD 5a, the AFE 11, the DSP 13, and part of the CPU 17. The image processing unit 7 includes part of the DSP 13, the RAM 15, and the

CPU 17.

The AFE 11 amplifies an analog output signal from the CCD 5a and converts the amplified signal into a digital signal.

The DSP 13 generates a timing signal for operating the CCD 5a and AFE 11 and carries out signal conversion, video signal generation, γ-conversion of a signal from the CCD 5a through the AFE 11, enhancement, digital signal amplification, and the like.

The RAM 15 is a memory to temporarily store brightness (density) data of an even field image provided by the DSP 13.

The CPU 17 carries out various operations and controls the shutter speeds of odd and even fields with the use of an arrangement such as the one explained with reference to Fig. 22. For an even field, the CPU 17 calculates an optimum exposure condition according to an average brightness of the even field, and according to the calculated condition, controls amplification of the AFE 11 and an electronic shutter operation of the CCD 5a.

Operation of the imaging system of Fig. 2 will be explained.

The CPU 17 sets initial shutter speeds and provides the DSP 13 with an odd field shutter speed control signal and an even field shutter speed control signal.

The DSP 13 generates a timing signal for operating the CCD 5a and AFE 11. Based on the timing signal, the CCD 5a picks up an image and the photodiodes of all pixels of the CCD 5a accumulate signal charge. For an odd field which is alternately arranged by the intermediary of an even field in a vertical direction, the signal charge of every odd photodiode (pixel) in a vertical direction is read at the set shutter speed. For an even field, the signal charge of every even photodiode (pixel) in the vertical direction is read at the set shutter speed.

The signal charge read in the CCD 5a is amplified by the AFE 11, is converted into a digital signal in the AFE 11, and is supplied to the DSP 13. The DSP 13 carries out signal conversion, video signal generation, γ-conversion, enhancement, and digital signal amplification on the supplied signal.

Brightness data related to an even field image provided by the DSP 13 is temporarily stored in the RAM 15.

For an even field, the CPU 17 calculates an optimum exposure condition according to an average brightness, and according to the calculated condition, controls the electronic shutter of the CCD 5a through the DSP 13.

For an odd field, the CPU 17 calculates an exposure condition according to the exposure switching control shown in the flowchart of Fig. 3.

Step S1 of the exposure switching control of Fig. 3 fetches brightness data of an even field block by block. More precisely, step S1 divides brightness data of the even field stored in the RAM 15 into blocks and calculates an average brightness of each block.

Step S2 converts each piece of block data into three-valued data. This step uses two thresholds to convert the average brightness of each block provided by step S1 into three-valued data.

Step S3 detects a high-brightness block. This step examines the three-valued data of each block and detects high-brightness blocks in a mass.

Step S4 groups high-brightness blocks. This step groups adjacent high-brightness blocks and finds the number of blocks of each group as a size of each group.

Step S5 detects medium-brightness blocks. This step finds a group of medium-brightness blocks around the high-brightness block group.

Step S6 calculates a halation level according to the size of the high-brightness group and the size of the medium-brightness group, or only the size of the medium-brightness group. This step detects a maximum halation level in the even field.

Step S7 determines a target exposure value for an odd field. This step calculates an exposure value for an odd field according to the halation level of the even field.

Thereafter, the next even field is going to be processed.

According to the exposure condition obtained through the steps of Fig. 3, the electronic shutter of the CCD 5a, an AGC gain of the AFE 11, a digital gain of the DSP 13, and the like are controlled to optimize the brightness of an image to be displayed.

The three-valued data calculation in step S2 may be based on the attribute of a majority of pixels in a given block instead of an average brightness of the block.

When the CCD camera 5 of Fig. 1 receives strong light from, for example, the headlights of an oncoming vehicle, the above-mentioned control can suppress the influence of the strong light without lowering the brightness of dark surroundings around the headlights.

A CCD camera generally used for a vehicle employs an interlace method. The interlace method employs even and odd fields that are provided alternately in terms of time to form an image having a set resolution for a viewer.

The CCD camera according to the related art explained above calculates an exposure condition from an average brightness of an even or odd field. The exposure condition determines an electronic shutter speed of a CCD, an amplification factor (AGC gain) of an AFE, and a digital amplification factor of a DSP, so that an image of optimum brightness may be displayed on a monitor.

The related art applies the calculated exposure condition to each of even and odd fields, and therefore, each field provides an image of the same brightness. When there is a strong light source such as the headlights of an oncoming vehicle in the night, the related art determines an exposure condition according to an average of overall brightness. As a result, the related art frequently provides the strong light source and its surroundings as saturated white objects (halation).

An example of halation is shown in Fig. 4. A strong light source and its periphery are saturated white and the saturated part is radially scattering. Figure 5 is a graph showing brightness levels along a line across the strong light source of Fig. 4. In Fig. 5, the strong light source and its periphery are saturated at a maximum brightness, and the brightness gradually decreases away from the strong light source.

If a pedestrian is present in the saturated area, it is impossible for the CCD camera to catch an image of the pedestrian. Even if the center of the strong light source is saturated white, the periphery thereof or the middle of the headlights must not be saturated so that an image of the pedestrian is picked up.

Figure 6 shows an example of a reflective object picked up in an image. The reflective object in Fig. 6 is a billboard, singnage, signposts, road signs, or the like that reflects light from headlights. Figure 7 is a graph showing brightness levels along a line across the reflective object of Fig. 6. In Fig. 7, the reflective object is saturated white. However, there is no halation around the reflective object. Namely, the brightness curve of Fig. 7 steeply drops from a peak representative of the reflective object. If a pedestrian is present in the vicinity of the reflective object, an image of the pedestrian will be clearly caught. In this case, there is no need of taking a countermeasure for halation. Namely, there is no need of suppressing the exposure value of an odd field lower than that of an even field. In consideration of a small light quantity from each object in the night, it will be preferable to secure a sufficient exposure value for each of the even and odd fields so that an object such as a pedestrian is easily recognized.

According to the present invention, each even field is processed according to the flowchart of Fig. 3 to detect halation and find an optimum exposure condition according to idea of the present invention so that a dark object in the night is displayed brighter. For each odd field, the present invention sets an exposure difference according to the brightness data of the preceding even field, so that an image is displayed with a minimum influence of strong light.

By combining images of the odd and even fields having such different characteristics, the present invention displays an image in which each object is clearly visible without halation even if there are strong light sources in the night, while the brightness of the periphery of the strong light is secured.

Processes of detecting a halation level from the brightness data of an even field, calculating an exposure condition according to the halation level, and providing the calculated result will be explained in detail.

Dividing an even field into blocks will be explained. This process is carried out in step S1 of Fig. 3.

The brightness data of an even field is fetched from the DSP 13 and stored in the RAM 15. The brightness data have, for example, 512 dots x 240 lines. This data is divided into, for example, 64 x 60 blocks each having 8 dots x 4 lines as shown in Fig. 8.

Thereafter, an average of the brightness of each block is calculated. Namely, an average of brightness values of all pixels (8 x 4 pixels) of each block is calculated. This calculation is also carried out in step S1 of Fig. 3.

Thereafter, the brightness average of each block is converted into three-valued data with the use of two thresholds. This conversion is carried out in step S2 of Fig. 3. Each brightness value is expressed with, for example, eight bits. In this case, a minimum brightness value is 0 and a maximum brightness value is 255. There are set, for example, a white threshold of 220 (or larger), a black threshold of 150 (or smaller), and intermediate values for gray. Each block is classified into one of the white, gray, and black colors.

Namely, each block is classified according to the average brightness thereof as follows:

if average brightness ≥ white threshold, then white; or
if white value > average brightness ≥ black threshold, then gray; or
if average brightness < black threshold, then black.

Instead of converting the average brightness of each block into three-valued data with the use of two thresholds, each pixel of each block may be converted into three-valued data with the use of the same thresholds, the numbers of white (high-brightness) pixels, gray (medium-brightness) pixels, and black (low-brightness) pixels are counted, and the color of the maximum number of pixels may be assigned to the block.

Figure 9 shows an example of classification based on pixels provided with three-valued data. Each pixel in a given block is classified into one of the white, gray, and black colors on the basis of the number of the gray pixles. If the ratio of gray pixels of the block is equal to or larger than 50%, the block is classified as gray. If the ratio of gray pixels is less than 50%, the block is classified as white or black. Figure 10 shows an example of a block having 32 (8 x 4) pixels. The ratio of gray pixels of this block is more than 50%, and therefore, the block is classified as gray.

Instead of dividing a field into blocks, each pixel may be studied to detect halation and calculate an exposure value.

After converting each block into three-valued data, a grouping process is carried out in step S4 of Fig. 3. The grouping process finds white (high-brightness) blocks in a mass.

In Fig. 8, the blocks are examined from the first block (0, 0) up to the last block (63, 59) to find a white block from a first line one after another. In each line, the examination is carried out from the left block up to the right block in Fig. 8.

If a white block is found, surrounding eight blocks of the found white block are checked to see if there is a white block in the surrounding eight blocks, as shown in Fig. 11. In Fig. 11, the checking is carried out from the left block "1" in a clockwise direction up to the lower left block "8." Found white blocks are successively chained to define a group of white blocks.

Figure 12 shows an output image including a strong light source whose periphery to be examined and Fig. 13 shows an image processed through the above-mentioned steps S1 to S4. The strong light source of Fig. 12 is from headlights. In Fig. 13, the strong light source of Fig. 12 is surrounded with continuous gray blocks. Inside the gray-block periphery, there are only white blocks, which form a group.

Thereafter, halation is detected in step S5 of Fig. 3. Halation involves a saturated center due to strong light and a periphery that gradually darkens. The center of halation is a group of white blocks and the periphery thereof is defined with gray blocks.

To detect halation, gray blocks around a group of white blocks are found, and the number of the gray blocks is counted.

Figure 14 shows ideal or typical examples of halation each having a group of white blocks surrounded with gray blocks. In the halation example of Fig. 14A, a white-block group is composed of one white block and is surrounded with eight gray blocks. In the halation example of Fig. 14B, a white-block group is composed of two white blocks and is surrounded with ten gray blocks. In the halation example of Fig. 14C, a white-block group is composed of three white blocks and is surrounded with twelve gray blocks. These numbers of gray blocks serve as reference block numbers when calculating a halation level according to the below-mentioned second calculation method.

A halation level is calculated in step S6 of Fig. 3 according to a group of white blocks and gray blocks around the group.

A first method of calculating a halation level finds, among white-block groups, a white-block group surrounded with a maximum number of gray blocks and determines this maximum number as the halation level.

A second method of calculating a halation level examines the size of a given white-block group and a halation probability of the group.

The first method of calculating a halation level will be explained.

The first method counts the number of gray blocks around each white-block group (representative of a light source). Among the counted numbers of gray blocks, a maximum one is chosen as a halation level.

Halation level = maximum of numbers of gray blocks around white-block groups on one image

Figure 15 shows an example of a white-block group having one white block. In this example, the number of gray blocks around the white-block group is seven, and therefore, a halation level is seven.

Figure 16 shows an original image including reflective objects and a light source with halation. Figure 17 shows a processed image composed of blocks with three-valued data made from the image of Fig. 16. The image of Fig. 17 includes many white blocks and white-block groups. Each of the white blocks and white-block groups are examined to determine the numbers of surrounding gray blocks, and a maximum one of the numbers of gray blocks is chosen as a halation level.

According to the first method, the image of Fig. 17 is analyzed as follows:

the number of gray blocks around a large billboard at an upper center part of the image is zero;
the number of gray blocks around a small billboard at a left part of the image is zero;
the number of gray blocks around the taillights of a front vehicle at a central part of the image is two;
the number of gray blocks around a streetlight at an upper right part of the image is four; and
the number of gray blocks around the headlights of an oncoming vehicle at a lower right part of the image is 32.

Consequently, 32 is the maximum number of gray blocks in the image of Fig. 17, and therefore, is chosen as a halation level.

Namely, the number of 32 of gray blocks around the headlights of the oncoming vehicle is the halation level of the image of Fig. 17.

The second method of calculating a halation level according to the size and probability of a white-block group will be explained.

The number of gray blocks around a given white-block group is actually counted. The number of white blocks in the white-block group is counted, and according to this number, a reference number of gray blocks (Fig. 14) is found. According to the actual number of gray blocks and the reference number of gray blocks, a halation probability of the white-block group is calculated as follows:

Halation probability (%) =

(actual number of gray blocks / reference number of gray blocks) x 100

The halation probability is multiplied by the number of white blocks of the white-block group to provide a halation level of the white-block group.

The image of Fig. 17 is analyzed as follows:

halation level of the large billboard is (0 / 26) x 100 x 21 = 0

halation level of the small billboard is (0 / 26) x 100 x 7 = 0

halation level of the taillights is (2 / 8) x 100 x 1 = 25

halation level of the streetlight is (4 / 18) x 100 x 8 = 178

halation level of the headlights is (32 / 37) x 100 x 43 = 3718

Maximum one of the halation levels is chosen as a halation level of the image of Fig. 17.

Namely, the halation level of 3718 around the headlights of the oncoming vehicle is selected as the halation level of the image of Fig. 17.

Thereafter, an exposure condition for an odd field is determined in step S7 of Fig. 3.

According to the halation level of the even field determined as mentioned above, an exposure difference between the even field and an odd field is found in a table shown in Fig. 18 for example. According to the exposure difference, an exposure condition for the odd field is determined to suppress the halation.

If the halation level obtained according to the first method is in the range of STEP0 (0 to 5) of Fig. 18, the exposure difference is 0 dB, and if the halation level is in the range of STEP6 (31 to 35), the exposure difference is -12 dB. If the halation level obtained according to the second method is in the range of STEP0 (0 to 500), the exposure difference is 0 dB, and if the halation level is in the range of STEP6 (3001 to 3500), the exposure difference is -12 dB.

If the halation level is in the range of STEP0, there is no exposure difference between the even and odd fields. If the halation level is in the range of STEP6, an exposure value for the odd field is set to be 12 dB smaller than the exposure value of the even field.

In this way, the halation level of a given even field is classified into one of STEP0 to STEP10, and the exposure value of a corresponding odd field is decreased by an exposure difference shown in a corresponding rightmost column of the table of Fig. 18.

As mentioned above, the present invention carries out dual exposure control according to a halation level, so that, even when there is a strong light source such as the headlights of an oncoming vehicle in the night as a dark environment, dark parts may be seen brighter and excessively bright parts may be seen darker without halation.

In practice, an unpleasant feeling given to the driver of the vehicle 1 (Fig. 1) due to a brightness change between images on the display must be minimized. For this, the dual exposure control is quickly carried out if there is a strong light source, and if the strong light becomes weaker, odd fields are gradually made brighter, as shown in Fig. 19.

For example, if the vehicle 1 (Fig. 1) encounters strong light of the headlights of an oncoming vehicle at a corner, the dual exposure control depending on a halation level is immediately carried out. When the oncoming vehicle passes by, the halation level will drop to the range of STEP0. If the dual exposure control immediately follows the exposure range of STEP0, the halation level of an image presented for the driver of the vehicle 1 will abruptly change to give the driver an unpleasant feeling.

To avoid this when light entering the CCD camera 5 (Fig. 1) becomes weaker, images in odd fields are gradually made brighter to minimize, suppress, or remove such an unpleasant feeling to be given to the driver.

Some examples will be explained. The vehicle 1 (Fig. 1) turns a corner and suddenly meets an oncoming vehicle whose headlights provide a halation level in the range of STEP6 of Fig. 18. If this halation level continues for at least two frames of even fields, an exposure value for an odd field is immediately controlled according to the exposure difference (-12 dB) set for the halation range of STEP6. When the oncoming vehicle passes by, the halation weakens. If a halation level below the halation range of STEP6 continues for at least three frames of even fields, an exposure value for an odd field is controlled according to the exposure difference (-10 dB) set for the halation range of STEP5. Thereafter, if a halation level below the halation range of STEP5 continues for at least three frames of even fields, an exposure value for an odd field is controlled according to the exposure difference (-8 dB) set for the halation range of STEP4. In this way, exposure values for odd fields are gradually changed up to the halation range of STEP0, to thereby gradually increase the brightness of odd fields. As a result, the driver of the vehicle 1 may sense no unpleasant feeling.

In this way, the imaging system according to the embodiment can control to change exposure depending on direct light and reflective light. Even if the vehicle 1 (Fig. 1) directly receives strong light from, for example, headlights, the imaging system can remove or suppress halation of the strong light that includes a central saturated white area and a gradually darkening periphery. Even if there is a pedestrian or an obstacle around the halation, the imaging system according to the present invention can clearly catch an image of the pedestrian or obstacle, as shown in Fig. 20.

When the headlights of the vehicle 1 (Fig. 1) irradiates, for example, a billboard, reflection from the billboard may reach the vehicle 1, as shown in Fig. 21. In this case, only the reflective object (billboard) may be saturated white and substantially no halation occurs around the reflective object. Namely, a brightness curve of the reflective object shows a sharp fall on each edge of a peak (Fig. 7). Accordingly, a pedestrian or an obstacle in the vicinity of the reflective object can be clearly caught in a picked up image. In this case, there is no need of changing exposure between even and odd fields. Rather, it is necessary to secure sufficient exposure for even and odd fields to clearly catch objects in the night.

The imaging system according to the embodiment is capable of reducing halation caused by strong light sources such as the headlights of an oncoming vehicle, to clearly display obstacles and pedestrians that may present in the vicinity of the halation. For reflection from billboard, signposts, road signs, and the like, the embodiment can secure sufficient exposure to provide bright images.

The image processing unit 7 according to the embodiment divides an even field image into high-brightness white blocks, medium-brightness gray blocks, and low-brightness black blocks, and according to the number of gray blocks around a group of white blocks of the even field, controls the exposure of an odd field.

Based on the number of gray blocks around a white-block group of an even field, the embodiment easily estimates a halation level of the white-block group, and according to the halation level, properly controls the exposure of an odd field periodically provided.

The image processing unit 7 may divide an even field of an image into a plurality of blocks, calculate an average brightness of each block, and classify the blocks into white, gray, and black blocks with the use of two brightness thresholds.

This technique is speedier than dividing an even field into blocks by examining the brightness of every pixel.

The image processing unit 7 may divide an even field into a plurality of blocks, classify pixels of each block into white, gray, and black pixels with the use of two thresholds, and choose a maximum one of the numbers of white, gray, and black pixels as the color of the block.

This technique processes pixel by pixel, and therefore, provides an accurate result.

The image processing unit 7 may control an image signal accumulation time of an odd field according to the maximum number of gray blocks around a white-block group of an even field.

This technique can easily identify halation and speedily cope with the halation.

The image processing unit 7 may control an image signal accumulation time of each odd field according to the number of white blocks in a white-block group, the number of gray blocks around the white-block group, and a reference number of gray blocks corresponding to the white-block group of an even field.

This technique can correctly identify a halation level and properly cope with halation.

The image processing unit 7 identifies a white block in an even field of image and then finds gray blocks around the white block. If found another white block, the image processing unit 7 adds it to the preceding white block.

This technique can correctly and speedily extract a group of white blocks and control halation related to the white-block group.

The imaging system according to the embodiment includes the infrared lamp 3, CCD camera 5, and image processing unit 7 that are installed in a vehicle. The infrared lamp 3 emits infrared light to the front side of the vehicle, and the CCD camera 5 picks up an image of the front side of the vehicle.

The imaging system according to the embodiment can reduce halation caused by strong light sources such as the headlights of an oncoming vehicle by removing or suppressing areas around the headlights in which high brightness gradually changes to low brightness. Even if a pedestrian or an obstacle is present in the vicinity of the halation, the imaging system can clearly catch an image of the pedestrian or the obstacle.

A relationship between even and odd fields may be reversed. Namely, it is possible to find out a halation level in an odd field, and according to the halation level, find an exposure difference between the odd field and an even field, to suppress exposure of the even field.

The DSP 13 may read the charge of odd and even fields pixel by pixel, or group by group of pixels.

The above-mentioned embodiment displays an output image on the head-up display 9. Instead, the image may be displayed on a monitor installed inside the vehicle. The infrared lamp 3 of the embodiment irradiates the front side of the vehicle 1. Instead, the infrared lamp 3 may irradiate the rear or the side of the vehicle so that the CCD camera may pick up an image of the rear or the side of the vehicle.

The imaging system according to the embodiment is applicable to vehicles, two-wheelers, vessels, and the like. The imaging system according to the embodiment can be used as a stand-alone system.

As mentioned above, the imaging system according to the present invention emits infrared light to the front side of a vehicle running in the night, picks up an image of the front side of the vehicle with a CCD camera installed in the vehicle, and grasps the state of the front side of the vehicle with the image.

**Claims**

1. An imaging system comprising:

    an infrared light emitter configured to emit infrared light;
    an image pickup unit configured to pick up an image of a place irradiated with the infrared light and convert the picked-up image into an electric signal; and
    an image processing unit configured to periodically change a signal accumulation time of the image pickup unit and periodically and continuously provide images of different exposure values; **characterized in that**

the image processing unit extracts a high-brightness block surrounded with a medium-brightness area from a first image of the periodically provided images, and according to a degree of the medium-brightness area, controls a signal accumulation time of a second image to be picked up.

2. The imaging system of claim 1, **characterized in that**
the image processing unit divides the first image into high-brightness blocks, medium-brightness blocks, and low-brightness blocks, and according to the number of medium-brightness blocks around a group of high-brightness blocks, controls an image signal accumulation time of the second image.

3. The imaging system of claim 2, **characterized in that**
the image processing unit divides the first image into a plurality of blocks, finds an average brightness value of each of the blocks, and according to the average brightness values of the blocks and two thresholds, classifies the blocks into high-brightness blocks, medium-brightness blocks, and low-brightness blocks.

4. The imaging system of claim 2, **characterized in that**
the image processing unit divides the first image into a plurality of blocks, classifies pixels in each of the blocks into high-brightness pixels, medium-brightness pixels, and low-brightness pixels according to two thresholds, finds a maximum one of the numbers of the high-, medium-, and low-brightness pixels in each of the blocks, determines the brightness level of the pixels of the maximum number as the brightness level of the block, and according to the determined brightness levels of the blocks, classifies the blocks into high-brightness blocks, medium-brightness blocks, and low-brightness blocks.

5. The imaging system of any one of claims 2 to 4, **characterized in that**
the image processing unit finds the number of medium-brightness blocks surrounding each high-brightness block, finds a maximum one of the numbers of the surrounding medium-brightness blocks, and controls an image signal accumulation time of the second image according to the maximum number.

6. The imaging system of any one of claims 2 to 4, **characterized in that**
the image processing unit finds the number of high-brightness blocks that form a group, the number of medium-brightness blocks around the group, and a reference number of medium-brightness blocks related to the group, and controls an image signal accumulation time of the second image according to these numbers.

7. The imaging system of claim 5 or 6, **characterized in that**
the image processing unit identifies a high-brightness block and searches the periphery of the high-brightness block for medium-brightness blocks and high-brightness blocks, the found high-brightness blocks being grouped with the high-brightness block.

8. The imaging system of any one of claims 1 to 7, **characterized in that**
the infrared light emitter, image pickup unit, and image processing unit are installed in a vehicle;
the infrared light emitter emits infrared light toward the outer side of the vehicle; and
the image pickup unit picks up an image of the outer side of the vehicle.

# Fig.1

# Fig.2

# Fig.3

Exposure switching control

Prepare brightness data of even field blocks — S1

Convert blocks into three-valued data — S2

Detect high-brightness blocks — S3

Group high-brightness blocks — S4

Detect medium-brightness blocks — S5

Calculate halation level — S6

Determine target exposure value for odd field — S7

Wait for next even field

## Fig.4

## Fig.5

Bright

Dark

## Fig.6

## Fig.7

Bright

Dark

# Fig.8

| (0, 0) | (1, 0) | • | • | (63, 0) |
|--------|--------|---|---|---------|
| (0, 1) | • | • | • | • |
| • | • | • | • | • |
| • | • | • | • | • |
| • | • | • | • | • |
| • | • | • | • | • |
| • | • | • | • | • |
| (0, 63) | • | • | • | (63, 63) |

X

Y

# Fig.9

| Ratio of gray | Ratio of white | Ratio of black | Area color |
|---------------|----------------|----------------|------------|
| $\geqq$50% | — | — | Gray |
| <50% | Ratio of white $\geqq$ Ratio of black | | White |
| | Ratio of white < Ratio of black | | Black |

Fig.10

Determine as gray block

Fig.11

| 2 | 3 | 4 |
|---|---|---|
| 1 | White | 5 |
| 8 | 7 | 6 |

## Fig.12

## Fig.13

## Fig.14A

| 1 | 2 | 3 |
|---|---|---|
| 4 | | 5 |
| 6 | 7 | 8 |

## Fig.14B

| 1 | 2 | 3 | 4 |
|---|---|---|---|
| 5 | | | 6 |
| 7 | 8 | 9 | 10 |

## Fig.14C

| 1 | 2 | 3 | 4 |
|---|---|---|---|
| 5 | | | 6 |
| 7 | 8 | | 9 |
| | 10 | 11 | 12 |

## Fig.15

# Fig.16

# Fig.17

## Fig.18

| | Halation level | | Exposure difference from even field |
| | Method 1 | Method 2 | |
|---|---|---|---|
| STEP0 | 0~5 | 0~500 | 0dB |
| STEP1 | 6~10 | 501~1000 | -2dB |
| STEP2 | 11~15 | 1001~1500 | -4dB |
| STEP3 | 16~20 | 1501~2000 | -6dB |
| STEP4 | 21~25 | 2001~2500 | -8dB |
| STEP5 | 26~30 | 2501~3000 | -10dB |
| STEP6 | 31~35 | 3001~3500 | -12dB |
| STEP7 | 36~40 | 3501~4000 | -14dB |
| STEP8 | 41~45 | 4001~4500 | -16dB |
| STEP9 | 46~50 | 4501~5000 | -18dB |
| STEP10 | 51~ | 5001~ | -20dB |

## Fig.19

Fig.20

Fig.21

# Fig.22

NTSC signal

Shutter speed
input

101  103  107  105  Shutter speed
setting switch  109

ODD

1/60
1/100
1/250
1/500

CCD ⟷ DSP  Odd set value
Even set value
Odd set value
Even set value

CPU

EVEN

1/1000
1/2000
1/4000
1/10000

Field pulse

Multiplexer

# Fig.23

ODD      EVEN      ODD

Field pulse

## Fig.24

## Fig.25

## Fig.26

# Fig.27

# Fig.28

**INTERNATIONAL SEARCH REPORT**

| International application No. |
| --- |
| PCT/JP03/16810 |

| A. CLASSIFICATION OF SUBJECT MATTER |
| --- |
| Int.Cl$^7$  H04N5/235, 5/335 |
| According to International Patent Classification (IPC) or to both national classification and IPC |

| B. FIELDS SEARCHED |
| --- |
| Minimum documentation searched (classification system followed by classification symbols) |
| Int.Cl$^7$  H04N5/235, 5/335 |

| Documentation searched other than minimum documentation to the extent that such documents are included in the fields searched |
| --- |
| Jitsuyo Shinan Koho          1922–1996   Jitsuyo Shinan Toroku Koho   1996–2004 |
| Kokai Jitsuyo Shinan Koho    1971–2004   Toroku Jitsuyo Shinan Koho   1994–2004 |

| Electronic data base consulted during the international search (name of data base and, where practicable, search terms used) |
| --- |

C. DOCUMENTS CONSIDERED TO BE RELEVANT

| Category* | Citation of document, with indication, where appropriate, of the relevant passages | Relevant to claim No. |
| --- | --- | --- |
| A | JP 10-155112 A  (Olympus Optical Co., Ltd.), 09 June, 1998 (09.06.98), Full text; Figs. 1 to 16 & US 6219097 B1 | 1-8 |
| A | JP 2002-314885 A  (Toshiba Corp.), 25 October, 2002 (25.10.02), Full text; Figs. 1 to 20 (Family: none) | 1-8 |
| A | JP 2003-250094 A  (Toshiba Corp.), 05 September, 2003 (05.09.03), Full text; Figs. 1 to 23 & EP 1339227 A2 | 1-8 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 September, 2004 (14.09.04) | 28 September, 2004 (28.09.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)